Europäisches Patentamt

European Patent Office

Office européen des brevets

(11) Veröffentlichungsnummer: **0 308 735**
**A2**

## (12) EUROPÄISCHE PATENTANMELDUNG

(21) Anmeldenummer: 88114657.5

(22) Anmeldetag: 08.09.88

(51) Int. Cl.⁴ **C08F 263/02 , C08F 267/06 , C08F 265/04 , C09J 3/14**

(30) Priorität: 22.09.87 DE 3731760

(43) Veröffentlichungstag der Anmeldung:
29.03.89 Patentblatt 89/13

(84) Benannte Vertragsstaaten:
AT BE CH DE ES FR GB IT LI NL SE

(71) Anmelder: **DEUTSCHE TEXACO AKTIENGESELLSCHAFT**
**Überseering 40**
**D-2000 Hamburg 60(DE)**

(72) Erfinder: **Zeibig, Winfried**
**Oberwallstrasse 4**
**D-4130 Moers 1(DE)**
Erfinder: **Hüskes, Heinrich**
**Oediger Platz 1a**
**D-4150 Krefeld 29(DE)**

(74) Vertreter: **Schupfner, Gerhard D.**
**Müller, Schupfner & Gauger Karlstrasse 5**
**Postfach 14 27**
**D-2110 Buchholz/Nordheide(DE)**

(54) **Wässrige Kuntstoffdispersion.**

(57) Es werden wäßrige Kunststoffdispersionen bestehend aus Kern-Schalen-Polymerisaten mit einer Glasübergangstemperatur des Kerns von -35°C bis +20°C bereitgestellt, die einen niedrigen oberen Heizwert und eine gute Affinität zu mineralischen Untergründen und Kunststoffschaumplatten sowie gute Zementstabilität aufweisen. Diese Dispersionen sind vorzüglich als Bindemittel für Baukleber geeignet.

EP 0 308 735 A2

## Wäßrige Kunststoffdispersion

Die Erfindung betrifft eine wäßrige Copolymerisatdispersion, bestehend aus einem Kern-Schalen-Polymerisat sowie Emulgatoren, ein Verfahren zu ihrer Herstellung und die Verwendung dieser Dispersion insbesondere für die Herstellung von zementhaltigen Mörteln für die Verklebung von Polystyrolschaumplatten auf silikatischen Untergründen, weiterhin die Verwendung der erfindungsgemäßen Dispersion für die Einbettung von Armierungsgewebe und Verkleben dieses Gewebes auf Polystyrolschaumplatten als tragfähigem Grund für Deckputze. Die Erfindung ist außerdem für die Verwendung in Flickmörteln zur Ausbesserung von Oberflächenschäden an Beton- und Zementwänden und in Betonspachteln zur Sanierung von durch korrodiertes Moniereisen beschädigten Betonbauten sehr gut geeignet.

Im Zuge der Energieeinsparungsmaßnahmen wird es zunehmend notwendig, Gebäude durch "Vollwärmeschutzsysteme" gegen Wärmeabgabe zu isolieren. Dazu wurden spezielle Fassadenbeschichtungssysteme entwickelt, die eine besonders geringe Wärmedurchgangszahl aufweisen. Ein wichtiges und kostengünstiges System besteht darin, mit einem Klebemörtel aus Zement, Zuschlagstoffen und Dispersion geschnittene oder formgeschäumte Polystyrolschaum- oder Polyurethanschaumplatten auf die Gebäudeaußenseite zu kleben. Danach wird die Außenseite der Schaumstoffplatten mit einem wie oben beschriebenen zementhaltigen Mörtel verfestigt oder mit einem zementfreien Mörtel beschichtet, dem Kunstfasern zur Erhöhung der Biegezugfestigkeit zugesetzt sind. Eine andere bevorzugte Möglichkeit besteht darin, Glasfasermatten oder Glasseidengewebe in diese Mörtelschicht einzubetten. Es wird somit eine "Druckausgleichsschicht" auf die Fassade aufgebracht, die Stöße von z.B. angelehnten Fahrrädern auffängt und damit Beschädigungen der druck- und stoßempfindlichen Schaumschicht verhindert. Zur dekorativen Verschönerung wird dann auf diese Schicht ein Kunststoffdispersionsputz aufgebracht oder Riemchen bzw. Kunststoffriemchen aufgeklebt.

Mörtel für das Ankleben der Schaumstoffplatten und die Druckausgleichsschicht werden heute mit Styrol-Butadien-Copolymerdispersionen, Vinylchlorid-Vinylacetat-Ethylen-Terpolymerdispersionen oder Vinylacetat-VeoVa®-Copolymerdispersionen hergestellt. Jede der Dispersionen dieser Typklassen weist bisher Nachteile auf. Vinylacetat-VeoVa®-Dispersionen verseifen relativ leicht, so daß durch Bewitterung und die Temperaturdifferenzen in den verschiedenen Jahreszeiten infolge der verschiedenen Schaumstoffplatten eine Ablösung der Schaumstoffbeschichtung vom Untergrund erfolgen kann. Aus gleichem Grund kann sich die Druckausgleichsschicht vom Schaumstoffuntergrund lösen. Insbesondere ist das der Fall, wenn im Verlaufe der Jahreszeiten der Taupunkt durch diese Schicht wandert und Schwitzwasser kondensiert. Ein ähnliches Verhalten zeigen Vinylchlorid-Vinylacetat-Ethylen-Dispersionen, die dazu noch den Nachteil einer zu geringen Affinität zu Polystyrolschaum haben. Die Verwendung dieser beiden Dispersionstypen führte in vielen Fällen zu erheblichen Gebäudeschäden. Sie werden zur Zeit dennoch eingesetzt, da sie mit einem oberen Heizwert von ca. 28 KJ/g für die Wärmedämmverbundsysteme nach Brandklasse B 1 (DIN 4102) als schwer entflammbare Baustoffe relativ einfach zugelassen werden können.

Die meistens zu einem guten Verbund führenden Styrol-Butadien-Copolymerisate, wie sie in der DE-PS 20 18 214 beschrieben sind, können infolge ihres oberen Heizwertes von ca. 41 KJ/g bei Hochbauten nur eingesetzt werden, wenn große Mengen an Flammschutzmitteln, wie Aluminiumoxidhydrat oder Antimontrioxid, in der Komposition der Zuschlagstoffe eingesetzt werden. Dies führt zu einer erheblichen Verteuerung und zu verschiedenen Komplikationen bei der Verwendung dieser Mörtel.

Der Erfindung liegt die Aufgabe zugrunde, Kunststoffdispersionen zur Verfügung zu stellen mit geringem oberen Heizwert, guter Affinität zu mineralischen Untergründen und Kunststoffschaumplatten, guter Zementstabilität, d.h. hoher Elektrolytstabilität gegen freie $Ca^{2+}$- und $Al^{3+}$-Ionen, geringer Wasserquellbarkeit und einer Glastemperatur von kleiner 20° C, um genügend Elastizität im Verbundsystem zu erreichen und Zug- und Dehnvorgänge in der Mörtelschicht aufzufangen. Sie sollen nur geringe Wasserquellbarkeit zeigen, um Ablösungen vom Untergrund infolge von Schrumpfungs- und Dehnungsvorgängen zu verhindern.

Diese Aufgabe wird erfindungsgemäß gelöst durch die Bereitstellung einer wäßrigen Kunststoffdispersion, die aus einem Kern-Schalen-Polymerisat mit einer Glasübergangstemperatur des Kerns von -35° C bis +20° C folgender Zusammensetzung besteht, bezogen auf Polymerfestsubstanz, im Kern

Ka) 45 - 95 Gew.% eines oder mehrerer Vinylester von Monocarbonsäuren, die insgesamt 1 bis 13 Kohlenstoffatome aufweisen, und/oder

eines oder mehrerer Maleinsäurediester eines gerad- oder verzweigtkettigen Alkanols mit 1 bis 8 Kohlenstoffatomen, und/oder eines oder mehrerer (Meth)acrylsäureester eines gerad- oder verzweigtkettigen Alkanols mit 1 bis 10 Kohlenstoffatomen;

2

Kb) 0 - 5 Gew.% einer alpha, beta-ungesättigten Monocarbonsäure mit 3 bis 4 Kohlenstoffatomen, und/oder einer ungesättigten Dicarbonsäure mit 4 bis 6 Kohlenstoffatomen, oder eines Gemisches solcher Säuren;

Kc) 0 - 5 Gew.% eines alpha, beta-ungesättigten Monocarbonsäureamides mit 3 bis 4 Kohlenstoffatomen, und/oder eines ungesättigten Dicarbonsäureamides mit 4 bis 6 Kohlenstoffatomen oder einer Mischung solcher Säureamide;

Kd) 0 - 5 Gew.% eines (Meth)acrylsäuremonoesters eines gerad- oder verzweigtkettigen Alkandiols oder -polyols mit 2 bis 10 Kohlenstoffatomen;

Ke) 0 - 5 Gew.% eines mit einem gerad- oder verzweigtkettigen Alkanols mit 1 bis 4 Kohlenstoffatomen veretherten N-Methylol(meth)acrylamides;

Kf) 0 - 3 Gew.% eines Vinyltrialkoxysilanes eines gerad-oder verzweigtkettigen Alkanols mit 1 bis 4 Kohlenstoffatomen und/oder eines(Meth)acrylsäureesters eines gerad- oder verzweigtkettigen Trialkoxysilylethanols oder -propanols mit 1 bis 4 Kohlenstoffatomen pro Alkoxygruppe; und in der Schale

Sa) 3 - 15 Gew.% eines aromatischen Vinylbenzols, das mit gerad- oder verzweigtkettigen Alkylgruppen einer Kohlenstoffanzahl von 1 bis 4 im Ring oder der Vinylgruppe substituiert sein kann;

Sb) 1 - 10 Gew.% einer alpha, beta-ungesättigten Monocarbonsäure mit 3 bis 4 Kohlenstoffatomen und/oder einer ungesättigten Dicarbonsäure mit 4 bis 6 Kohlenstoffatomen, oder eines Gemisches solcher Säuren;

Sc) 0 - 3 Gew.% eines alpha, beta-ungesättigten Monocarbonsäureamides mit 3 bis 4 Kohlenstoffatomen und/oder eines ungesättigten Dicarbonsäureamides mit 4 bis 6 Kohlenstoffatomen oder einer Mischung solcher Säureamide;

Sd) 0 - 5 Gew.% eines (Meth)acrylsäuremonoesters eines gerad- oder verzweigtkettigen Alkandiols oder -polyols mit 2 bis 10 Kohlenstoffatomen;

Se) 0 - 5 Gew.% eines mit einem gerad- oder verzweigtkettigen Alkanol mit 1 bis 4 Kohlenstoffatomen veretherten N-Methylol(meth)acrylamide

Sf) 0 - 3 Gew.% eines Vinyltrialkoxysilanes eines gerad-oder verzweigtkettigen Alkanols mit 1 bis 4 Kohlenstoffatomen und/oder eines (Meth)acrylsäureesters eines gerad- oder verzweigtkettigen Trialkoxysilylethanols oder -propanols mit 1 bis 4 Kohlenstoffatomen pro Alkoxygruppe.

Insbesondere weist die wäßrige Kunststoffdispersion die folgende Zusammensetzung, bezogen auf die Polymersubstanz, auf im Kern

Ka) Vinylacetat, Vinylpropionat, Vinylpivalat und/oder Vinylversatat® und/oder Di-n-butylmaleinat und/oder Di-2-ethylhexylmaleinat und/oder Methylmethacrylat, Methylacrylat, Ethylacrylat, n-Butylacrylat und/oder 2-Ethylhexylacrylat;

Kb) Acrylsäure und/oder Methacrylsäure und/oder Crotonsäure und/oder Maleinsäure und/oder Fumarsäure;

Kc) Acrylamid und/oder Methacrylamid;

Kd) Hydroxyethyl(meth)acrylat, Hydroxypropyl(meth)-acrylat;

Ke) N-Isobutoxymethyl(meth)acrylamid;

Kf) Methacrylolylpropoxytrimethoxysilan oder Vinyltrimethoxysilan; und

in der Schale

Sa) Styrol, alpha-Methylstyrol oder Vinyltoluol;

Sb) Acrylsäure und/oder Methacrylsäure und/oder Crotonsäure und/oder Maleinsäure und/oder Fumarsäure;

Sc) Acrylamid und/oder Methacrylamid;

Sd) Hydroxyethyl(meth)acrylat, Hydroxypropyl(meth)acrylat;

Se) N-Isobutoxymethyl(meth)acrylamid;

Sf) Methacrylolylpropoxytrimethoxysilan oder Vinyltrimethoxysilan.

Die Zusammensetzung der wäßrigen Kunststoffdispersion, bezogen auf die Polymersubstanz, beträgt bevorzugt 60 - 90 Gew.% , insbesondere 80 bis 90 Gew.%, und besonders bevorzugt 89 - 90 Gew.% der Komponente Ka),

0 - 3 Gew.% und insbesondere 0 - 1 Gew.% der Komponente Kb),

0 - 2 Gew.% und insbesondere 0 - 0,5 Gew.% der Komponente Kc),

0 - 3 Gew.% und insbesondere 0 - 1 Gew.% der Komponente Kd),

0 - 3 Gew.% und insbesondere 0 - 1 Gew.% der Komponente Ke),

0 - 2 Gew.% und insbesondere 0 - 0,5 Gew.% der Komponente Kf),

8 - 14 Gew.% und insbesondere 9 - 12 Gew.% der Komponente Sa),

2 - 8 Gew.% und insbesondere 2 - 5 Gew.% der Komponente Sb),

0 - 2 Gew.% und insbesondere 0 - 1 Gew.% der Komponente Sc),

0 - 3 Gew.% und insbesondere 0 - 1 Gew.% der Komponente Sd),

0 - 3 Gew.% und insbesondere 0 - 1 Gew.% der Komponente Se),

0 - 3 Gew.% und insbesondere 0 - 1 Gew.% der Komponente Sf).

Nach einer besonders bevorzugten Ausgestaltung der Erfindung weist die wäßrige Kunststoffdispersion die folgende Zusammensetzung , bezogen auf Polymersubstanz, auf:

im Kern

Ka) 45 - 95 Gew.% eines oder mehrerer Vinylester von Monocarbonsäuren mit insgesamt 1 bis 13 Kohlenstoffatomen, insbesondere von Vinylacetat, Vinylversatat® und/oder einem oder mehreren (Meth)-acrylsäureester eines gerad-oder verzweigtkettigen Alkanols mit 1 bis 10 Kohlenstoffatomen, insbesondere Methylmethacrylat, n-Butylacrylat oder 2-Ethylhexylacrylat; und

in der Schale

Sa) 3 - 15 Gew.% Styrol;

Sb) 1 - 10 Gew.% einer alpha, beta-ungesättigten Monocarbonsäure mit 3 bis 4 Kohlenstoffatomen, insbesondere Methacrylsäure und/oder Acrylsäure.

Es wurde gefunden, daß die erfindungsgemäßen Kunststoffdispersionen durch ein zweistufiges Polymerisationsverfahren erhalten werden können. Es wird bei diesem Verfahren ein Kern-Schale-Polymerisat mit unterschiedlichem Monomeraufbau erzeugt. Grundlage dieses erfindungsgemäßen Polymerisates ist der Aufbau aus einem Kern mit geringem oberen Heizwert und einer dünnen Schale, die fest mit dem Kern infolge Polymerkettenverhakung verbunden ist und eine besonders hohe Affinität zu mineralischen und Kunststoffuntergründen, insbesondere zu Polystyrolschaum besitzt.

Um die gewünschte Eigenschaft einer Glastemperatur des Kernpolymerisates zwischen -35 °C und +20 °C zu erhalten, ist die Monomerkombination aus den Monomeren Ka) bis Kf) entsprechend auszuwählen. Unter dieser Voraussetzung liegt die Mindestfilmbildetemperatur im Bereich <0 bis 10 °C. Diese Eigenschaft läßt die Verwendung der erfindungsgemäßen Dispersionen ohne bzw. nur mit geringsten Mengen Lösemittel für den Einsatz in Bauklebern zu. Für die Verklebung von Polystyrolschaumplatten dürfen keine nennenswerten Mengen an Lösemitteln in Baukleberapplikationen verwendet werden, da sonst der Polystyrolschaum durch diese Lösemittel schrumpft.

Die Glastemperatur des Schalenpolymerisates kann bedeutend über der des Kernpolymerisates liegen, da die Hülle relativ dünn ist und der flexible Kern zu einer Verfilmung führt. Es kann deshalb aus vorwiegend "harten" Monomeren einer hohen Homopolymerisatglastemperatur aufgebaut werden.

Der Einbau ungesättigter Carbonsäuren in das Schalenpolymerisat ist für eine Ausbildung der gewünschten Schale notwendig. Elektronenmikroskopische Aufnahmen verdeutlichen den Einfluß dieser Comonomeren. Überraschend wurde gefunden, daß das Monomerverhältnis von aromatischer Vinylverbindung zu ungesättigter Carbonsäure im Bereich von 95 : 5 bis 50 : 50, vorzugsweise zwischen 85 : 15 bis 65 : 35 liegen sollte, um eine besonders gute Haftung auf mineralischen Untergründen und Polystyrolschaum zu erhalten.

Die Herstellung der wäßrigen Kunststoffdispersion erfolgt insbesondere durch radikalische Emulsionspolymerisation des Kernmonomerengemisches in Gegenwart eines radikalbildenden Katalysators und eines oder mehrerer Emulgatoren und, nach Abreagieren der Kernmonomeren, Aufpolymerisation des Schalenmonomerengemisches im Zulaufverfahren.

Die Emulsionspolymerisation wird bevorzugt in Gegenwart von 0,1 bis 1,5 Gew.% Katalysator und 0,2 bis 5 Gew.% Emulgator(en) durchgeführt, jeweils bezogen auf die Einsatzmenge.

Die erfindungsgemäße Copolymerisatdispersion besitzt einen Feststoffgehalt von 30 bis 60 Gew.%, vorzugsweise 45 bis 55 Gew.%. Sie enthält neben dem Copolymerisat einen oder mehrere anionische Emulgatoren und/oder einen oder mehrere nichtionische Emulgatoren.

Beispiele für verwendbare anionische Emulgatoren sind Alkalisalze von Schwefel- oder Phosphorsäureteilestern von Alkoholen, oxethylierten Alkylphenolen oder Alkoholen, sowie Alkyl-, Aryl- oder Alkylarylsulfonate. Außerdem sind Salze von Sulfobernsteinsäureestern und -halbestern sowie N-substituierten Sulfobernsteinsäureamiden geeignet. Vorzugsweise werden Sulfobernsteinsäurehalbester, Alkanolsulfate und oxethylierte Alkylphenolsulfate eingesetzt. Zur Erhöhung der Stabilität der erfindungsgemäßen Dispersionen werden zusätzlich ein oder mehrere nichtionische Emulgatoren vom Typ eines oxethylierten Alkylphenols, Fettalkohols oder Fettalkoholethanolamides, z.B. Nonylphenol, mit 13 bis 50 Mol Ethylenoxid eingesetzt. Bevorzugt werden oxethylierte Fettalkoholethanolamide eingesetzt.

Als Katalysator eignen sich die üblichen Ammonium-, Natrium-und Kaliumsalze der Peroxodischwefelsäure und der Peroxodiphosphorsäure. Es können auch organische Peroxide wie Dibenzoylperoxid oder tert-Butylhydroperoxid u.ä. eingesetzt werden. Als Aktivatoren können Natriumdisulfit, Hydrazin, Hydroxylamin u.ä. Reduktionsmittel eingesetzt werden. Als Beschleuniger der Polymerisationsreaktion können ferner Salze von Übergangsmetallen, wie Z.B. von Cobalt, Eisen oder Vanadium, eingesetzt werden.

Das erfindungsgemäße Polymerisationsverfahren wird bevorzugt als Emulsionspolymerisation in einem wäßrigen Medium in bekannten Apparaten, wie einem Rührkessel mit Heiz-und Kühlvorrichtung, durchgeführt. Dabei sind die Monomeren in einem wäßrigen Medium emulgiert.

4

Die Herstellung des Kernpolymerisates kann wie folgt durchgeführt werden: Die Zugabe der Monomeren kann dadurch erfolgen, daß eine Lösung aus dem gesamten Wasser, dem Emulgator und einem Teil des Katalysators vorgelegt wird und das Kernmonomerengemisch und der Rest des Katalysators bei Polymerisationstemperatur langsam zugegeben wird. Weiterhin ist es möglich, einen Teil des Wassers, der Emulgatoren und des Katalysators vorzulegen, aus den Kernmonomeren, einem Teil des restlichen Wassers, einem Teil der restlichen Emulgatoren und einem Teil des restlichen Katalysators eine Präemulsion I herzustellen und diese bei Polymerisationstemperatur langsam einzuspeisen. Ferner besteht die Möglichkeit, einen Teil des Wassers, der Emulgatoren, der Kernmonomeren und einen Teil des Katalysators vorzulegen und aus dem restlichen Teil des Kernmonomeren, einem Teil des restlichen Wassers, der restlichen Emulgatoren und des restlichen Katalysators eine Präemulsion I herzustellen. Nach Beginn der Polymerisation wird die Präemulsion bzw. Monomermischung langsam bei Polymerisationstemperatur im Verlaufe von 1 bis 4 Stunden zugespeist. Bei dem vorzugsweisen Verfahren ohne Monomervorlage in der Reaktorfüllung befinden sich 10 bis 70 Gew.% des gesamten Wassers, bezogen auf die Ansatzmenge, 10 bis 70 Gew.% der gesamten Katalysatormenge und 0 bis 60 Gew.% der eingesetzten Emulgatoren in der Vorlage. Die Reaktorinnentemperatur wird nach Einspeisungsende weiter auf Reaktionstemperatur belassen. Nach 10 bis 90 Minuten ab Einspeisungsende wird dann das Schalenpolymerisat aufgebaut: Die Schale kann durch Zuspeisung eines Schalenmonomerengemisches und gleichzeitiger Katalysatornachgabe aufgebaut werden. Vorzugsweise wird jedoch eine zweite Präemulsion II aus den zu polymerisierenden Schalenmonomeren, dem Rest des Wassers, dem Rest der Emulgatoren und dem restlichen Katalysator hergestellt und im Verlauf von 15 bis 120 Minuten in den Reaktor eingespeist. Die Polymerisationstemperatur liegt in einem Bereich von 50 bis 100° C, vorzugsweise 80 bis 95° C. Nach beendeter Zugabe des Monomerengemisches II bzw. der Präemulsion II wird der Ansatz noch 0,5 bis 3 Stunden bei 50 bis 100° C, vorzugsweise bei 80 bis 95° C zur Herabsetzung des Gehalts an Restmonomeren gerührt.

Die durch das erfindungsgemäße Verfahren erhaltenen Kernpolymerisate haben Glasübergangstemperaturen im Bereich von -35° C bis +20° C, vorzugsweise zwischen -20° C und +15° C. Das Schalenpolymerisat mit einem relativen Teilchendurchmesseranteil von 2 bis 12 % besitzt eine Glasübergangstemperatur von vorzugsweise 30 bis 120° C. Infolge dieser dünnen Hülle ist das Kernpolymerisat mit seiner Flexibilität eigenschaftsmäßig dominierend und bringt die zähelastischen Eigenschaften des Kerns flexibilisierend in Mörtelmassen zum Tragen.

Das erfindungsgemäße Verfahren führt zu Copolymerisaten, die eine mittlere Teilchengröße zwischen 30 und 800 nm, bevorzugt zwischen 100 und 300 nm, aufweisen. Erfindungsgemäße Copolymerdispersionen einer Teilchengröße zwischen 100 und 300 nm weisen überraschend eine besonders hohe Stabilität gegenüber Zement auf. Bevorzugt und außerordentlich gut geeignet sind erfindungsgemäße Dispersionen einer Teilchengröße zwischen 150 und 230 nm.

Gegenstand der Erfindung ist schließlich die Anwendung der erfindungsgemäßen Dispersionen in Klebemörtelmassen, die durch Mischen der erfindungsgemäßen Dispersionen mit Zuschlagstoffen und anschließendem Zusatz von Zement hergestellt werden. Gegenstand der Erfindung ist weiterhin die Verwendung der erfindungsgemäßen Dispersionen in Flickmörteln zur Ausbesserung von Oberflächenschäden an Beton-und Zementwänden und in Betonspachteln zur Sanierung von durch infolge korrodierten Moniereisens abgesprengter Bauteile beschädigten Betonbauten sowie in Vollwärmeschutzsystemen zur Herstellung von Druckausgleichschichten.

Die folgenden Beispiele sollen die Erfindung näher erläutern. Prozentangaben und Verhältnisangaben beziehen sich jeweils auf das Gewicht.

Die Polymerisationsverfahren wurden in einer üblichen Polymerisationsanlage mit Reaktoren, Rührern, Leitungen und Vorratsbehältern aus Glas durchgeführt.


Beispiel 1

Die Dispersion wurde aus einer Startlösung und zwei Präemulsionen, einer Präemulsion I zur Polymerisation des Kerns und einer Präemulsion II zur Polymerisation der Schale, hergestellt.

Startlösung:

entmineralisiertes Wasser    19,062 kg
Dinatriumhydrogenphosphat    0,175 kg
Natrium-octylphenyl-25EO-sulfat (30 %ig in Wasser)    0,433 kg
Natriumperoxodisulfat (5 %ig in Wasser)    4,162 kg
Entschäumer    0,007 kg

Präemulsion I:

entmineralisiertes Wasser    23,963 kg
Dinatriumhydrogenphosphat    0,175 kg
Natrium-octylphenyl-25EO-sulfat (30 %ig in Wasser)    1,950 kg
Ölsäureethanolamid-8EO (25 %ig in Wasser)    2,774 kg
Natriumperoxodisulfat (5 %ig in Wasser)    2,774 kg
VeoVa 10®    32,370 kg
Vinylacetat    27,508 kg
Entschäumer    0,007 kg

Präemulsion II:

entmineralisiertes Wasser    4,227 kg
Natrium-octylphenyl-25EO-sulfat (30 %ig in Wasser)    1,084 kg
Ölsäureethanolamid-8EO (25 %ig in Wasser)    2,774 kg
Natriumperoxodisulfat (5 %ig in Wasser)    2,774 kg
Styrol    7,400 kg
Acrylsäure (50 %ig in Wasser)    4,162 kg
Entschäumer    0,007 kg

Konfektionierung:

Microzid    0,139 kg
Natronlauge (12,5 %ig in Wasser, pH: 4,5)    ca. 2 kg

Herstellung:

Die Startlösung wurde ohne Natriumperoxodisulfat auf 80°C aufgeheizt, dann die Natriumperoxodisulfatlösung zugegeben. Sobald die Reaktortemperatur wieder die 80°C erreicht hatte, wurde mit der Einspeisung der Präemulsion I begonnen. In den ersten 45 Minuten wurde die Präemulsion vom 1/10 der Endeinspeisegeschwindigkeit gleichmäßig zunehmend bis zur Endeinspeisegeschwindigkeit steigend in den Reaktor gepumpt. Ab der 45. Minute wurde ein konstanter Strom an Präemulsion dem Reaktor zugeführt. Nach 120 Minuten wurde die Präemulsion I eingespeist und die Reaktionstemperatur auf 85 bis 87°C gesteigert. Es folgte eine 45-minütige Nachreaktion bei 85 bis 90°C. Während dieser Zeit wurde die Präemulsion II hergestellt. Anschließend wurde diese mit einer konstanten Geschwindigkeit in ca. 85 bis 90 Minuten eingespeist. Dabei wurde die Reaktionstemperatur bei 87 bis 90°C gehalten. In der sich anschließenden 90 Minuten dauernden Nachreaktion bei 85 bis 90°C wurde weitergerührt, danach gekühlt und bei ca. 60°C Microzid zugesetzt. Mit Natronlauge wurde auf pH 4,5 eingestellt und über 63 $\mu$m-Sieb filtriert.

Die physikalischen Daten der Dispersion gibt die Tabelle wieder:

Feststoff (DIN 53 189)    49,9 Gew.%
Viskosität (MS-DIN 145; DIN 53 788)    45 mPas
pH-Wert (DIN 53 785)    4,3
Mindestfilmbildetemperatur (DIN 53 787)    5°C

Glastemperatur       0 °C
Teilchengröße       164 nm
Koagulat       0,03 Gew.%
Oberer Heizwert       31,1 KJ/g

Beispiel 2

Im Beispiel 2 wurde nach dem gleichen Verfahren wie in Beispiel 1 gearbeitet. Die einzelnen Lösungen bzw. Präemulsionen waren wie folgt zusammengesetzt:

Startlösung:

entmineralisiertes Wasser       3,893 kg
Dinatriumhydrogenphosphat       0,032 kg
Natriumperoxodisulfat (5 %ig in Wasser)       0,397 kg
Entschäumer       0,001 kg

Präemulsion I:

entmineralisiertes Wasser       3,243 kg
Dinatriumhydrogenphosphat       0,031 kg
Natrium-octylphenyl-25EO-sulfat (30 %ig in Wasser)       0,308 kg
Ölsäureethanolamid-8EO (25 %ig in Wasser)       0,519 kg
Natriumperoxodisulfat (5 %ig in Wasser)       0,560 kg
VeoVa 10®       5,677 kg
Vinylacetat       0,003 kg
Entschäumer       0,003 kg

Präemulsion II:

entmineralisiertes Wasser       2,433 kg
Natrium-octylphenyl-25EO-sulfat (30 %ig in Wasser)       0,308 kg
Ölsäureethanolamid-8EO (25 %ig in Wasser)       0,519 kg
Natriumperoxodisulfat (5 %ig in Wasser)       0,560 kg
Stryol       1,298 kg
Acrylsäure (50 %ig in Wasser)       0,650 kg
Entschäumer       0,003 kg

Konfektionierung:

Microzid       0,025 kg
Natronlauge (12,5 %ig in Wasser, pH: 4,5)       ca. 0,015 kg

Die physikalischen Daten der Dispersion gibt die Tabelle wieder:
Feststoff (DIN 53 189)       49,8 Gew.%
Viskosität (MS-DIN 145; DIN 53 788)       36 mPas
pH-Wert (DIN 53 785)       4,6
Mindestfilmbildetemperatur (DIN 53 787)       5 °C
Glastemperatur       2 °C
Teilchengröße       206 nm
Koagulat       0,08 Gew.%
Oberer Heizwert       31,0 KJ/g

Beispiel 3

Im Beispiel 3 wurde nach dem gleichen Verfahren wie in Beispiel 1 gearbeitet. Die einzelnen Lösungen bzw. Präemulsionen waren wie folgt zusammengesetzt:

Startlösung:

entmineralisiertes Wasser        240,0 g
Dinatriumhydrogenphosphat        2,0 g
Natriumperoxodisulfat (5 %ig in Wasser)        24,5 g

Präemulsion I:

entmineralisiertes Wasser        200,0 g
Dinatriumhydrogenphosphat        1,9 g
Natrium-octylphenyl-25EO-sulfat (30 %ig in Wasser)        19,0
Ölsäureethanolamid-8EO (25 %ig in Wasser)        32,0 g
Natriumperoxodisulfat (5 %ig in Wasser)        34,5 g
VeoVa 10® *        350,0 g
Vinylacetat        305,0g
Entschäumer        0,2g

Präemulsion II:

entmineralisiertes Wasser        150,0 g
Natrium-octylphenyl-25EO-sulfat (30 %ig in Wasser)        19,0 g
Ölsäureethanolamid-8EO (25 %ig in Wasser)        32,0 g
Natriumperoxodisulfat (5 %ig in Wasser)        34,5 g
Styrol        80,0g
Acrylsäure        15,0g
Entschäumer        0,2g

Konfektionierung:

Microzid        1,6 g
Natronlauge (12,5 %ig in Wasser, bis pH ca. 4,5)

Die physikalischen Daten der Dispersion gibt die Tabelle wieder:
Feststoff (DIN 53 189)        49,8 Gew.%
Viskosität (MS-DIN 145; DIN 53 788)        34 mPas
pH-Wert (DIN 53 785)        5,0
Mindestfilmbildetemperatur (DIN 53 787)        3 °C
Glastemperatur        -2 °C
Teilchengröße        206 nm
Koagulat        < 0,01 Gew.%

Beispiel 4

Im Beispiel 4 wurde nach dem gleichen Verfahren wie in Beispiel 1 gearbeitet. Die einzelnen Lösungen bzw. präemulsionen waren wie folgt zusammengesetzt:

*VeoVa  10®  =  Versaticsäurevinylester        mit  etwa  10 Kohlenstoffatomen

Startlösung:

        entmineralisiertes Wasser        272,2 g
    Dinatriumhydrogenphosphat        0,9 g
    Natrium-octylphenyl-25EO-sulfat (30 %ig in Wasser)        6,0 g
    Natriumperoxodisulfat (5 %ig in Wasser)        54,0 g
    Entschäumer        0,4 g


Präemulsion I:

    entmineralisiertes Wasser        340,4 g
    Dinatriumhydrogenphosphat        0,9 g
    Natrium-octylphenyl-25EO-sulfat (30 %ig in Wasser)        27,0 g
    Ölsäureethanolamid-8EO (25 %ig in Wasser)        36,0 g
    Natriumperoxodisulfat (5 %ig in Wasser)        36,0 g
    n-Butylacrylat        236,7 g
    Vinylacetat        540,0 g
    Entschäumer        0,4 g


Präemulsion II:

    entmineralisiertes Wasser        68,1 g
    Natrium-octylphenyl-25EO-sulfat (30 %ig in Wasser)        15,0 g
    Ölsäureethanolamid-8EO (25 %ig in Wasser)        36,0 g
    Natriumperoxodisulfat (5 %ig in Wasser)        36,0 g
    Styrol        96,3 g
    Acrylsäure        27,0 g
    Entschäumer        0,2 g


Konfektionierung:

Microzid        2,7 g
Natronlauge (12,5 %ig in Wasser, bis pH ca.        4,5)

        Die physikalischen Daten der Dispersion gibt die Tabelle wieder:
Feststoff (DIN 53 189)        49,9 Gew.%
Viskosität (MS-DIN 145; DIN 53 788)        27 mPas
pH-Wert (DIN 53 785) 4,6
Mindestfilmbildetemperatur (DIN 53 787)        4 °C
Glastemperatur        14 °C
Teilchengröße        233 nm
Koagulat        0,06 Gew.%
Oberer Heizwert        30,2 KJ/g


Beispiel 5

        Im Beispiel 5 wurde nach dem gleichen Verfahren wie in Beispiel 1 gearbeitet. Die einzelnen Lösungen bzw. Präemulsionen waren wie folgt zusammengesetzt:

Startlösung:

entmineralisiertes Wasser     272,3 g
Dinatriumhydrogenphosphat     0,9 g
Natrium-octylphenyl-25EO-sulfat (30 %ig in Wasser)     6,0 g
Natriumperoxodisulfat (5 %ig in Wasser)     54,0 g
Entschäumer     0,2g

Präemulsion I:

entmineralisiertes Wasser     340,3 g
Dinatriumhydrogenphosphat     0,9 g
Natrium-octylphenyl-25EO-sulfat (30 %ig in Wasser)     27,0 g
Ölsäureethanolamid-8EO (25 %ig in Waser)     36,0 g
Natriumperoxodisulfat (5 %ig in Wasser)     36,0 g
Methylmethacrylat     135,0 g
2-Ethylhexylacrylat     281,7 g
Vinylacetat     360,0 g
Entschäumer     0,2 g

Präemulsion II:

entmineralisiertes Wasser     68,1 g
Natrium-octylphenyl-25EO-sulfat (30 %ig in Wasser)     15,0 g
Ölsäureethanolamid-8EO (25 %ig in Wasser)     36,0 g
Natriumperoxodisulfat (5 %ig in Wasser)     36,0 g
Styrol     96,3 g
Acrylsäure     27,0 g
Entschäumer     0,2 g

Konfektionierung:

Microzid     2,7 g
Natronlauge bis pH ca.4,5     2.7 g

Die physikalischen Daten der Dispersion gibt die Tabelle wieder:
Feststoff (DIN 53 189)     49,2 Gew.%
Viskosität (MS-DIN 145; DIN 53 788)     26 mPas
pH-Wert (DIN 53 785)     4,5
Mindestfilmbildetemperatur (DIN 53 787)     9 °C
Glastemperatur     -10 °C
Teilchengröße     216 nm
Koagulat     0,08 Gew.%

Beispiel 6 (Vergleich)

Im Beispiel 6 wurde nach dem gleichen Verfahren wie in Beispiel 1 gearbeitet. Die einzelnen Lösungen bzw. Präemulsionen waren wie folgt zusammengesetzt:

Startlösung:

entmineralisiertes Wasser     272,2 g
Dinatriumhydrogenphosphat     0,9 g
Natrium-octylphenyl-25EO-sulfat (30 %ig in Wasser)     6,0 g
Natriumperoxodisulfat (5 %ig in Wasser)     54,0 g
Entschäumer     0.4 g


Präemulsion I:

entmineralisiertes Wasser 340,9 g
Dinatriumhydrogenphosphat     0,9 g
Natrium-octylphenyl-25EO-sulfat (30 %ig in Wasser)     27,0 g
Ölsäureethanolamid-8EO (25 %ig in Wasser)     36,0 g
Natriumperoxodisulfat (5 %ig in Wasser)     36,0 g
n-Butylacrylat 245,7 g
Vinylacetat     558,0 g
Entschäumer     0,4 g


Präemulsion II:

entmineralisiertes Wasser     68,5 g
Natrium-octylphenyl-25EO-sulfat (30 %ig in Wasser)     15,0 g
Ölsäureethanolamid-8EO (25 %ig in Wasser)     36,0 g
Natriumperoxodisulfat (5 %ig in Wasser) 36,0 g
Styrol     96,3 g
Entschäumer     0,2 g


Konfektionierung:

Microzid     2,7 g
Natronlauge bis pH ca. 4,5

Die physikalischen Daten der Dispersion gibt die Tabelle wieder
Feststoff (DIN 53 189)     50,2 Gew.%
Viskosität (MS-DIN 145, DIN 53 788)     29 mPas
pH-Wert (DIN 53 785)     4,6
Mindestfilmbildetemperatur (DIN 53 787)     4 °C
Glastemperatur     9 °C
Teilchengröße     203 nm
Koagulat     0,09 Gew.%


Beispiel 7 (Vergleich)

Im Beispiel 7 wurde nach dem gleichen Verfahren wie in Beispiel 1 gearbeitet. Die einzelnen Lösungen bzw. Präemulsionen waren wie folgt zusammengesetzt:

Startlösung:

entmineralisiertes Wasser    272,3 g
Dinatriumhydrogenphosphat    0,9 g
Natrium-octylphenyl-25EO-sulfat (30 %ig in Wasser)    6,0 g
Natriumperoxodisulfat (5 %ig in Wasser)    54,0 g
Entschäumer    0,2 g


Präemulsion I:

entmineralisiertes Wasser    340,3 g
Dinatriumhydrogenphosphat    0,9 g
Natrium-octylphenyl-25EO-sulfat (30 %ig in Wasser)    27,0 g
Ölsäureethanolamid-8EO (25 %ig in Wasser)    36,0 g
Natriumperoxodisulfat (5 %ig in Wasser)    36,0 g
Methylmethacrylat    144,0 g
2-Ethylhexylacrylat    290,7 g
Vinylacetat    369,0 g
Entschäumer    0,2 g


Präemusion II:

entmineralisiertes Wasser    68,1 g
Natrium-octylphenyl-25EO-sulfat (30 %ig in Wasser)    15,0 g
Ölsäureethanolamid-8EO (25 %ig in Wasser)    36,0 g
Natriumperoxodisulfat (5 %ig in Wasser)    36,0 g
Styrol    96,3 g
Entschäumer    0,2 g


Konfektionierung:

Microzid    2,7 g
Natronlauge bis pH ca. 4,5


Die physikalischen Daten der Dispersion gibt die Tabelle wieder:
Feststoff (DIN 53 189)    50,2 Gew.%
Viskosität (MS-DIN 145; DIN 53 788)    26 mPas
pH-Wert (DIN 53 785)    4,4
Mindestfilmbildetemperatur (DIN 53 787)    0 °C
Glastemperatur    -2 °C
Teilchengröße    218 nm
Koagulat    0,10 Gew.%


Beispiel 8 (Vergleich)

Handelsübliche Styrol-Butadien-Dispersion speziell zum Einsatz in zementhaltigen Systemen.
Feststoff (DIN 53 189)    46,4 Gew.%
Viskosität (MS-DIN 145; DIN 53 788)    67 mPas
pH-Wert (DIN 53 785)    5,0
Mindestfilmbildetemperatur (DIN 53 787)    0 °C
Glastemperatur    -11 °C
Teilchengröße    143 nm
Oberer Heizwert    41,4 KJ/g

Beispiel 9 (Vergleich)

Handelsübliche Vinylacetat-Vinylchlorid-Ethylen-Dispersion für den Einsatz in Klebemörteln.

Feststoff (DIN 53 189)      48,9 Gew.%

Viskosität (MS-DIN 145; DIN 53 788)      2700 mPas

pH-Wert (DIN 53 785)      3,5

Mindestfilmbildetemperatur (DIN 53 787)      0 °C

Glastemperatur      11 °C

Teilchengröße      1700 nm

Oberer Heizwert      27,6 KJ/g

Beispiel 10 (Anwendung)

Klebemörtel

Unter Rühren wurden folgende Bestandteile gelöst bzw. gemischt:

Wasser      107,9 kg

Methylcellulose (Typ 30000 mPas)      1,1 kg

Testbenzin 145/200      6,0 kg

Calciumcarbonat 2 - 10 $\mu$m      30,0 kg

Calciumcarbonat 130 - 400 $\mu$m      280,0 kg

Sand ca. 800 $\mu$m      450,0 kg

Dispersion 50 %ig      125,0 kg

Dem Bautenkleber wurden 25 % Zement PZ 35 F zugesetzt.

Prüfmethoden und -ergebnisse

Prüfung 1 - Bestimmung der offenen Zeit und Durchhärtung des Klebemörtels in dicken Schichten:

In einem 350 cm³-Becher wurden 40 g Zement PZ 35 F und 200 g Klebemörtel von Hand gut untergerührt. Die Offenzeit bzw. Verarbeitbarkeit wurde in stündlichem Abstand durch leichtes Rühren mit einem Spatel ermittelt. Das Ende der Offenzeit ist erreicht, wenn der Einbettungsmörtel in eine stramme Paste übergeht.

Die Durchhärtung in dicken Schichten wurde in gleichen Bechern gemessen. Nach ein und nach zwei Tagen wurde durch Eindrücken eines Spatels die Härte des Inhalts ermittelt und in relativen Zahlen von 1 bis 10 angegeben (1 = sehr hart, 10 = nicht durchgehärtet, noch weich).

Prüfung 2 - Bestimmung der Härte in trockenem Zustand und nach Wasserlagerung

Es wurde ein 10 cm breiter und 3 mm bzw. 6 mm dicker Streifen Einbettungsmörtel auf Schaumpolystyrol aufgezogen und mit einem Shorehärteprüfgerät A nach ein und zwei Tagen Trockenzeit die Härte der Mörtelschicht bestimmt. In der Tabelle sind der Shorehärteanfangswert und der Abfall der Härte nach 30 Sekunden Aufsetz- bzw. Eindringzeit des Meßdorns angegeben.

Die Härte des Einbettungsmörtels nach Wasserlagerung wurde wie folgt bestimmt: Auf die Mörtelschicht auf Schaumpolystyrol wurde nach ein und nach zwei Tagen Raumtrocknung ein mit Wasser durchtränkter Wattebausch gelegt und mit einem Uhrglas abgedeckt. Nach 24 Stunden Einwirkzeit wurde der Wattebausch abgenommen und sofort die Shorehärte wie im trockenen Zustand bestimmt. Die Anfangshärte nach Wasserlagerung sollte nicht mehr als 10 % unter dem Meßwert im trockenen Zustand liegen. Der Abfall der Härte nach 30 Sekunden Eindringzeit sollte nicht mehr als 30 % des Anfangswertes betragen.

Prüfung 3 - Bestimmung der Haftfestigkeit auf Schaumpolysty-

Die Haftfestigkeit wurde in einem vollständigen Vollwärmeschutzsystem geprüft. Hierzu wurde eine 33 x 33 cm² große Schaumpolystyrolplatte mit 480 g Klebemörtel unter Einlage eines Glasseidengewebes beschichtet. Das Glasgewebe stand an einer Seite 5 cm über. Nach 24 Stunden Raumtemperaturtrocknung wurde ein Dispersionsdeckputz aufgebracht. Die Haftfestigkeit in trockenem Zustand wurde nach 14 Tagen Raumtemperaturtrocknung des Systems wie folgt bestimmt:

Die Beschichtung (Dispersionsdeckputz + Klebemörtel + Glasseidengewebe) wurde unter einem Winkel von 45 Grad abgeschält und die Fläche der an dieser Beschichtung haftenden ausgerissenen Schaumpolystyrolkugeln bestimmt. Diese Fläche wird in Fl.% der Gesamtfläche angegeben. Die Prüfung der Haftfestigkeit nach Wasserlagerung wurde wie folgt durchgeführt: Es wurden Probekörper eines vollständigen Vollwärmeschutzsystems wie oben beschrieben hergestellt und 14 Tage bei Raumtemperatur getrocknet und danach zwei Tage mit der beschichteten Seite nach unten in eine mit Wasser gefüllte Wanne gelegt. Danach wurde wie oben beschrieben die Beschichtung unter einem Winkel von 45 Grad abgeschält und ebenfalls der Schaumpolystyrolausriß in F1.% gemessen. Die Prüfung nach Wasserlagerung und Rücktrocknung wurde in gleicher Weise bestimmt, jedoch wurden die Probekörper 14 Tage getrocknet, 2 Tage in Wasser gelegt und anschließend drei Stunden mit einer Infrarotlampe bestrahlt. Der Abstand zum Infrarotstrahler wurde so bemessen, daß die Probenoberfläche eine Temperatur von 60°C aufwies. Nach dem Bestrahlen ließ man eine Stunde abkühlen und schälte anschließend die Beschichtung ab.

Prüfung 4 - Bestimmung der Schwerentflammbarkeit im Vollwärmeschutzsystem

Die Prüfung erfolgte im Brandschacht nach DIN 4102. Die erforderliche minimale Restlänge betrug 15 cm, die maximale Rauchgastemperatur 150°C. Als Klebemörtel wurde obige Formulierung mit einer Auftragsmenge von 4 kg/m² aufgebracht. Der Deckputz wurde wie folgt formuliert und in einer Menge von 4,2 kg/m² aufgebracht.

Deckputz:

Wasser   45,0 kg
Natriumpolyphosphat (10 %ig in Wasser)   5,0 kg
Natriumpolyacrylat (30 %ig in Wasser)   1,0 kg
Natronlauge (20 %ig)   2,0 kg
Entschäumer   3,0 kg
Polyurethanverdicker (33 %ig in Wasser)   4,0 kg
Methylcellulose (Typ 20000 mPas)   0,6 kg
aromatenarmes Testbenzin   7,5 kg
Dispersion Vinylacetat-VeoVa®50 %ig   150,0 kg
Titandioxid Rutil-Typ   35,0 kg
Calciumcarbonat 50μm   150,0 kg
Calciumcarbonat 120μm   250,0 kg
Talgfettalkohol   5,0 kg
Polyethylenfaser 0,3 mm Schnittlänge   2,0 kg
Calciumcarbonat 1,8 - 2,5 mm   400,0 kg

| Ergebnisse: | | | | | | | | | |
|---|---|---|---|---|---|---|---|---|---|
| Beispiel Nr. | 1 | 2 | 3 | 4 | 5 | 6(V) | 7(V) | 8(V) | 9(V) |
| **Prüfung 1:** | | | | | | | | | |
| Offenzeit (h) | > 7 | > 7 | 7 | > 7 | > 7 | 5 | 5 | 7 | 6 |
| Härte (1d) | 8 | 8 | 5 | 7 | 7 | 8 | 6 | 8 | 7 |
| Härte (2d) | 4 | 5 | 3 | 6 | 6 | 7 | 6 | 6 | 5 |
| **Prüfung 2:** | | | | | | | | | |
| Shorehärte 3 mm nach | | | | | | | | | |
| (1d) | 89/3 | 89/4 | 91/4 | 92/5 | 90/4 | 68/30 | 88/27 | 90/4 | 89/3 |
| (2d) | 91/2 | 90/1 | 95/2 | 93/2 | 91/2 | 67/18 | 88/16 | 90/3 | 88/2 |
| (1d + 24hH20) | 87/21 | 84/31 | 83/30 | 78/37 | 82/35 | 60/50 | 73/57 | 82/30 | 84/40 |
| (2d + 24hH20) | 89/9 | 88/19 | 84/13 | 84/24 | 86/23 | 60/42 | 72/45 | 86/19 | 88/23 |
| Shorehärte 6 mm nach · | | | | | | | | | |
| (1d) | 90/15 | 88/23 | 88/26 | 84/66 | 84/30 | 62/40 | 78/30 | 87/22 | 89/14 |
| (2d) | 93/2 | 89/2 | 91/2 | 94/1 | 90/2 | 76/17 | 89/10 | 90/2 | 87/2 |
| (1d + 24hH20) | 84/37 | 90/34 | 82/40 | 82/51 | 87/47 | 60/30 | 75/40 | 83/38 | 84/40 |
| (2d + 24hH20) | 86/11 | 89/22 | 88/15 | 85/18 | 86/20 | 72/14 | 88/44 | 83/18 | 87/32 |
| **Prüfung 3:** | | | | | | | | | |
| Schaumpolystyrolausriß in Fl.-% | | | | | | | | | |
| nach 14 Tagen | 90 | 80 | 100 | 60 | 70 | 0 | 70 | 80 | 60 |
| nach 14 Tagen + H20 | 80 | 30 | 70 | 20 | 20 | 0 | 10 | 30 | 0 |
| Rücktrocknung | 90 | 60 | 100 | 40 | 50 | 0 | 10 | 40 | 40 |
| **Prüfung 4:** | | | | | | | | | |
| Brandschachttest DIN 4102 Restlänge der Beschichtung der Probekörper in (cm) | 28 | | | | | | | 13 | 39 |
| Maximale Rauchgastemperatur ($^\circ$C) | 126 | | | | | | | 198 | 118 |

Die erfindungsgemäßen Dispersionen Beispiel 1 bis 5 weisen im ersten Anwendungsbeispiel, Beispiel 10, eine gute Offenzeit und ausreichende Härte auf. Die Shorehärte, vor allem unter Wasserbelastung, ist mindestens genauso hoch wie die in den Vergleichsbeispielen 8 und 9. Großen Vorteil jedoch haben die erfindungsgemäßen Dispersionen in der Haftung auf Polystyrol auch unter Wasserbelastung. Ähnlich gute Werte weist nur Vergleichsbeispiel 8 (handelsübliche Styrol-Butadien-Dispersion) auf. Diese hat jedoch den Nachteil des hohen Heizwertes und der damit nicht zu bestehenden Brandschachtprüfung (die Restlänge ist zu niedrig, die Rauchgastemperatur zu hoch). Der Einfluß der Komponente Sb) für das Polymerisat ist an den Beispielen 6 und 7 zu erkennen. Diese Produkte ohne Acrylsäure haben nach Wasserlagerung keine oder nur äußerst geringe Haftung auf Schaumpolystyrol.

Beispiel 11 (Anwendung)

Flickmörtel

Unter Rühren wurden folgende Bestandteile gelöst bzw. gemischt:
Wasser        37,4 kg
Methylcellulose (Typ 30000 mPas)        0,6 kg
Entschäumer        0,1 kg
Testbenzin 145/200        1,9 kg
Dispersion 50 %ig        60,0 kg
Einer handelsüblichen Estrichmischung wurden 10 Gew.% obiger Mischung zugesetzt.

| Mörteltechnische Prüfung: | | | |
|---|---|---|---|
| Dispersion Beispiel Nr. | 1 | 9(V) | ohne |
| Biegezugfestigkeit (kp/cm$^2$)<br>Druckfestigkeit (kp/cm$^2$) | 88<br>257 | 75<br>263 | 46<br>227 |

Im zweiten Anwendungsbeispiel, Beispiel 11, weist die erfindungsgemäße Dispersion des Beispiels 1 gegenüber der handelsüblichen Vinylacetat-Vinylchlorid-Ethylen-Dispersion des Beispiels 9 deutlich höhere Biegezugfestigkeit auf. Der Flickmörtel weist somit unter Verwendung von Beispiel 1 eine bedeutend größere Elastizität auf, ohne daß die Härte (Druckfestigkeit) verlorengeht.

Beispiel 12 (Anwendung)

Zementspachtel

Unter Rühren wurden folgende Bestandteile gelöst bzw. gemischt:

Wasser     157,6 kg
Methylcellulose (Typ 10000 mPas)     0,3 kg
Testbenzin 145/200     8,7 kg
Polyurethanverdicker     1,3 kg
Dispersion 50 %ig     180,0 kg
Calciumcarbonat 2- 10 $\mu$m     80,0 kg
Quarzmehl 6- 40 $\mu$m     100,00 kg
Quarzmehl 40-250 $\mu$m     150 ,0 kg
Sand ca.800 $\mu$m     314,0 kg
Polyethylenfaser Länge ca. 0,3 mm     6,0 kg
Entschäumer     1,0 kg

Vor der Verarbeitung wurden 25 Gew.% Wasser zugesetzt. Dann wurde die Mischung mit Zement PZ 35 F im Gewichtsverhältnis 1 : 1 versetzt.

Zur Prüfung wurde ein 10 cm breiter und 3 mm dicker Streifen Zementspachtel auf Schaumpolystyrol aufgezogen und mit einem Shorehärteprüfgerät A nach einem Tag Trockenzeit die Härte der Zementspachtelschicht bestimmt. In der Tabelle sind der Shorehärteanfangswert und der Abfall der Härte nach 30 Sekunden Aufsetz- bzw. Eindringzeit des Meßdorns angegeben.

Die Härte des Zementspachtels nach Wasserlagerung wurde wie folgt bestimmt: Auf die Mörtelschicht auf Schaumpolystyrol wurde nach einem Tag Raumtrocknung ein mit Wasser durchtränkter Wattebausch gelegt und mit einem Uhrglas abgedeckt. Nach 24 Stunden Einwirkzeit wurde der Wattebausch abgenommen und sofort die Shorehärte wie im trockenen Zustand bestimmt. Die Anfangshärte nach Wasserlagerung sollte nicht mehr als 20 % unter dem Meßwert im trockenen Zustand liegen. Der Abfall der Härte nach 30 Sekunden Eindringzeit sollte nicht mehr als 30 % des Anfangswertes betragen.

| Dispersion Beispiel Nr. | 1 | 8 | 9 |
|---|---|---|---|
| Shorehärte nach 1 Tag | 88/6 | 84/9 | 89/4 |
| Shorehärte nach 1 Tag und 24 Stunden Wasserbelastung | 74/24 | 66/41 | 79/23 |
| Verarbeitbarkeit | 1 | 2 | 5 |
| Kellenstand | 1 | 1 | 3 |
| (Bewertung 1 = sehr gut; 5 = mangelhaft) | | | |

Im dritten Anwendungsbeispiel, Beispiel 12, weist die erfindungsgemäße Dispersion des Beispiels 1 bei üblichen Härtewerten eine extrem verbesserte Verarbeitbarkeit auf. Die handelsübliche Styrol-Butadien-Dispersion des Beispiels 8 hat zwar auch noch eine gute Verarbeitbarkeit, wird jedoch unter Wasserbelastung viel zu weich.

In den Beispielen wird Mikrozid eingesetzt, um Kunststoffdispersionen vor Bakterien- und Pilzbefall zu schützen. Mikrozid ist ein allgemeiner Begriff für ein Konservierungsmittel. Die verschiedensten handelsüblichen Produkte erfüllen diesen Zweck.

**Ansprüche**

1. Wäßrige Kunststoffdispersion, bestehend aus einem Kern-Schalen-Polymerisat sowie Emulgatoren, **gekennzeichnet durch** ein Kern-Schalen-Polymerisat mit einer Glasübergangstemperatur des Kerns von -35°C bis +20°C folgender Zusammensetzung, bezogen auf Polymerfestsubstanz,
im Kern

Ka) 45 - 95 Gew.% eines oder mehrerer Vinylester von Monocarbonsäuren, die insgesamt 1 bis 13 Kohlenstoffatome aufweisen, und/oder
eines oder mehrerer Maleinsäurediester eines gerad-oder verzweigtkettigen Alkanols mit 1 bis 8 Kohlenstoffatomen, und/oder
eines oder mehrerer (Meth)acrylsäureester eines gerad-oder verzweigtkettigen Alkanols mit 1 bis 10 Kohlenstoffatomen;
Kb) 0 - 5 Gew.% einer alpha, beta-ungesättigten Monocarbonsäure mit 3 bis 4 Kohlenstoffatomen, und/oder einer ungesättigten Dicarbonsäure mit 4 bis 6 Kohlenstoffatomen, oder eines Gemisches solcher Säuren;
Kc) 0 - 5 Gew.% eines alpha, beta-ungesättigten Monocarbonsäureamides mit 3 bis 4 Kohlenstoffatomen, und/oder
eines ungesättigten Dicarbonsäureamides mit 4 bis 6 Kohlenstoffatomen oder einer Mischung solcher Säureamide;
Kd) 0 - 5 Gew.% eines (Meth)acrylsäuremonoesters eines gerad- oder verzweigtkettigen Alkandiols oder -polyols mit 2 bis 10 Kohlenstoffatomen;
Ke) 0 - 5 Gew.% eines mit einem gerad- oder verzweigt kettigen Alkanols mit 1 bis 4 Kohlenstoffatomen veretherten N-Methylol(meth)acrylamides;
Kf) 0 - 3 Gew.% eines Vinyltrialkoxysilanes eines gerad- oder verzweigtkettigen Alkanols mit 1 bis 4 Kohlenstoffatomen und/oder
eines (Meth)acrylsäureesters eines gerad- oder verzweigtkettigen Trialkoxysilylethanols oder -propanols mit 1 bis 4 Kohlenstoffatomen pro Alkoxygruppe; und in der Schale
Sa) 3 - 15 Gew.% eines aromatischen Vinylbenzols, das mit gerad- oder verzweigtkettigen Alkylgruppen einer Kohlenstoffanzahl von 1 bis 4 im Ring oder der Vinylgruppe substituiert sein kann;
Sb) 1 - 10 Gew.% einer alpha, beta-ungesättigten Monocarbonsäure mit 3 bis 4 Kohlenstoffatomen und/oder einer ungesättigten Dicarbonsäure mit 4 bis 6 Kohlenstoffatomen, oder eines Gemisches solcher Säuren;
Sc) 0 - 3 Gew.% eines alpha, beta-ungesättigten Monocarbonsäureamides mit 3 bis 4 Kohlenstoffatomen und/oder eines ungesättigten Dicarbonsäureamides mit 4 bis 6 Kohlenstoffatomen oder einer Mischung solcher Säureamide;
Sd) 0 - 5 Gew.% eines (Meth)acrylsäuremonoesters eines gerad- oder verzweigtkettigen Alkandiolsoder -polyols mit 2 bis 10 Kohlenstoffatomen;
Se) 0 - 5 Gew.% eines mit einem gerad- oder verzweigtkettigen Alkanol mit 1 bis 4 Kohlenstoffatomen veretherten N-Methylol(meth)acrylamides;
Sf) 0 - 3 Gew.% eines Vinyltrialkoxysilanes eines gerad- oder verzweigtkettigen Alkanols mit 1 bis 4 Kohlenstoffatomen und/oder
eines (Meth)acrylsäureesters eines gerad- oder verzweigtkettigen Trialkoxysilylethanols oder -propanols mit 1 bis 4 Kohlenstoffatomen pro Alkoxygruppe.

2. Wäßrige Kunststoffdispersion nach Anspruch 1,
**gekennzeichnet durch** die folgende Zusammensetzung, bezogen auf Polymerfestsubstanz, im Kern
Ka) Vinylacetat, Vinylpropionat, Vinylpivalat und/oder Vinylversatat® und/oder
Di-n-butylmaleinat und/oder Di-2-ethylhexylmaleinat und/oder Methylmethacrylat, Methylacrylat, Ethylacrylat, n-Butylacrylat und/oder 2-Ethylhexylacrylat;
Kb) Acrylsäure und/oder Methacrylsäure und/oder Crotonsäure und/oder Maleinsäure und/oder Fumarsäure;
Kc) Acrylamid und/oder Methacrylamid;
Kd) Hydroxyethyl(meth)acrylat, Hydroxypropyl(meth)acrylat;
Ke) N-Isobutoxymethyl(meth)acrylamid;
Kf) Methacrylolylpropoxytrimethoxysilan oder Vinyltrimethoxysilan; und
in der Schale

Sa) Styrol, alpha-Methylstyrol oder Vinyltoluol;

Sb) Acrylsäure und/oder Methacrylsäure und/oder Crotonsäure und/oder Maleinsäure und/oder Fumarsäure;

Sc) Acrylamid und/oder Methacrylamid;

Sd) Hydroxyethyl(meth)acrylat, Hydroxypropyl(meth)acrylat;

Se) N-Isobutoxymethyl(meth)acrylamid;

Sf) Methacrylolylpropoxytrimethoxysilan oder Vinyltrimethoxysilan.

3. Wäßrige Kunststoffdispersion nach einem der Ansprüche 1 bis 2, **gekennzeichnet durch** die folgende Zusammensetzung, bezogen auf Polymersubstanz,

60 - 90 Gew.%, insbesondere 80 bis 90 Gew.%, und besonders bevorzugt 89 - 90 Gew.% der Komponente Ka),

0 - 3 Gew.% und insbesondere 0 - 1 Gew.% der Komponente Kb),

0 - 2 Gew.% und insbesondere 0 - 0,5 Gew.% der Komponente Kc),

0 - 3 Gew.% und insbesondere 0 - 1 Gew.% der Komponente Kd),

0 - 3 Gew.% und insbesondere 0 - 1 Gew.% der Komponente Ke),

0 - 2 Gew.% und insbesondere 0 - 0,5 Gew.% der Komponente Kf),

8 - 14 Gew.% und insbesondere 9 - 12 Gew.% der Komponente Sa),

2 - 8 Gew.% und insbesondere 2 - 5 Gew.% der Komponente Sb),

0 - 2 Gew.% und insbesondere 0 - 1 Gew.% der Komponente Sc),

0 - 3 Gew.% und insbesondere 0 - 1 Gew.% der Komponente Sd),

0 - 3 Gew.% und insbesondere 0 - 1 Gew.% der Komponente Se),

0 - 3 Gew.% und insbesondere 0 - 1 Gew.% der Komponente Sf).

4. Wäßrige Kunststoffdispersion nach einem der Ansprüche 1 bis 3,

**gekennzeichnet durch** die folgende Zusammensetzung, bezogen auf die Polymersubstanz, im Kern

Ka) 45 - 95 Gew.% eines oder mehrerer Vinylester von Monocarbonsäuren mit insgesamt 1 bis 13 Kohlenstoffatomen, insbesondere von Vinylacetat, Vinylversatat ® und/oder einem oder mehreren (Meth)acrylsäureester eines gerad-oder verzweigtkettigen Alkanols mit 1 bis 10 Kohlenstoffatomen, insbesondere Methylmethacrylat, n-Butylacrylat oder 2-Ethylhexylacrylat; und

in der Schale

Sa) 3 - 15 Gew.% Styrol;

Sb) 1 - 10 Gew.% einer alpha, beta-ungesättigten Monocarbonsäure mit 3 bis 4 Kohlenstoffatomen, insbesondere Methacrylsäure und/oder Acrylsäure.

5. verfahren zue Herstellung einer wäßrigen Kunststoffdispersion nach einem der Ansprüche 1 bis 4,

**gekennzeichnet durch** radikalische Emulsionspolymerisation des Kernmonomerengemisches in Gegenwart eines radikalbildenden Katalysators und eines oder mehrerer Emulgatoren und, nach Abreagieren der. Kernmonomeren, Aufpolymerisation des Schalenmonomerengemisches im Zulaufverfahren.

6. Verfahren nach Anspruch 5,

**dadurch gekennzeichnet,**

daß man die Emulsionspolymerisation in Gegenwart von 0,1 bis 1,5 Gew.% Katalysator und 0,2 bis 5 Gew.% Emulgator(en) durchführt, jeweils bezogen auf die Einsatzmenge.

7. Verfahren nach Anspruch 5 oder 6,

**dadurch gekennzeichnet**

daß man die Emulsionspolymerisation in Gegenwart von Ammonium-, Natrium- oder Kaliumsalzen der Peroxodischwefelsäure oder der Peroxodiphosphorsäure oder Gemischen davon als Katalysator und in Gegenwart von Natrium-, Kalium- oder Ammoniumsalzen von Sulfobernsteinsäureestern und -halbestern, Alkanolsulfaten und oxethylierten Alkylphenolsulfaten als anionische Emulgatoren und/oder oxethyliertem Fettalkohol oder Fettalkoholethanolamid mit 3 bis 20 Mol Ethylenoxid als nichtionischen Emulgator oder Gemischen davon durchführt.

8. Verfahren nach einem der Ansprüche 5 bis 7,

**dadurch gekennzeichnet**

daß man die Emulsionspolymerisation in wäßrigem Medium in an sich bekannten Vorrichtungen durchführt, indem ein Teil des Wassers, der Kernmonomeren, der Emulgatoren und des Katalysators vorgelegt werden, die Vorlage aufgeheizt wird und sodann eine Präemulsion aus den restlichen Bestandteilen nach Beginn der Polymerisation langsam bei Polymerisationstemperatur zugespeist wird und anschließend die Schalenmonomeren aufpolymerisiert werden.

9. Verfahren nach Anspruch 8,

**dadurch gekennzeichnet**

daß man eine Lösung aus dem gesamten Wasser des Ansatzes, dem gesamten Emulgator und einem Teil

18

des Katalysators vorlegt und das Kernmonomerengemisch und den Rest des Katalysators bei Polymerisationstemperatur langsam einspeist und nach Abreagieren der Kernmonomeren die Schalenmonomeren aufpolymerisiert.

10. Verfahren nach Anspruch 8,

**dadurch gekennzeichnet**

daß man einen Teil des Wassers, der Emulgatoren und des Katalysators vorlegt und das Kernmonomerengemisch zusammen mit einem Teil des restlichen Wassers, einem Teil der restlichen Emulgatoren und einem Teil des restlichen Katalysators als Präemulsion I bei Polymerisationstemperatur langsam im Verlauf von 1 bis 4 Stunden einspeist, die Reaktion nach Einspeisungsende etwa 10 bis 90 Minuten bei der Polymerisationstemperatur beläßt und dann das restliche Wasser, den restlichen Emulgator und den restlichen Katalysator mit dem Schalenmonomerengemisch als Präemulsion II im Verlauf von 15 bis 120 Minuten in den Reaktor einspeist.

11. Verfahren nach Anspruch 10,

**dadurch gekennzeichnet**

daß man 10 bis 70 Gew.% des gesamten Wassers, bezogen auf die Ansatzmenge, 10 bis 70 Gew.% der gesamten Katalysatormenge und 0 bis 60 % der eingesetzten Emulgatoren vorlegt, die Präemulsion I bei Polymerisationstemperatur einspeist, den Reaktor nach Einspeisungsende etwa 10 bis 90 Minuten weiter bei der Polymerisationstemperatur beläßt und dann das Schalenpolymerisat aufbaut.

12. Anwendung einer wäßrigen Kunststoffdispersion nach einem der Ansprüche 1 bis 4 als Bindemittel zur Herstellung von Bauklebern.

13. Anwendung nach Anspruch 12 zur Herstellung von Klebemörteln, Zementspachteln und Flick- bzw. Reparatur mörteln.

14. Anwendung nach Anspruch 12 in Vollwärmeschutzsystemen zur Herstellung von Druckausgleichschichten.